# EUROPEAN PATENT SPECIFICATION

(11) **EP 3 274 151 B1**
(45) Date of publication and mention of the grant of the patent: **21.08.2019**
(21) Application number: 15720783.8
(22) Date of filing: 23.03.2015
(51) Int. Cl.: B29C 51/44, B29C 51/26

(54) **THERMOFORMING MACHINE AND METHOD**
THERMOFORMMASCHINE UND VERFAHREN
MACHINE DE THERMOFORMAGE ET PROCÉDÉ

(43) Date of publication of application: 31.01.2018
(73) Proprietor: WM Thermoforming Machines SA, 6855 Stabio (CH)
(72) Inventor: GOTTI, Dario, 6855 Stabio (CH)
(74) Representative: Zardi, Marco
(86) International application number: PCT/IB2015/052110
(87) International publication number: WO 2016/151359

(56) References cited:
- EP-A1- 2 100 835
- EP-A2- 0 995 582
- EP-A2- 1 125 717
- DE-U1- 20 102 961
- US-A1- 2001 030 104
- US-A1- 2002 110 441

## Description

### Field of the invention

The present invention concerns a thermoforming machine, particularly for the production of plastic items.

### Prior art

In a thermoforming machine there is a need to transfer items from a forming press to an output device, generally a conveyor belt, in an efficient manner and without slowing down the work of the press.

For this purpose, it is known to store the items extracted from the press in a suitable container, for example a basket, which can move between two positions of accumulation and delivery to the output device, respectively. The items are for example plastic plates or cups that are stacked in the basket, and once a given load is reached the basket moves to the delivery position where a suitable ejector transfers the items to the conveyor belt.

Such a solution, however, is not fully satisfactory since it can slow down the production cycle. For example, if delivery to the conveyor belt and return of the basket to the accumulation position require a time longer than the forming cycle time, the press is forced to wait. It should be considered that a thermoforming press of items like plastic trays or cups can operate at a speed of the order of 40 - 60 cycles/min corresponding to a cycle time around 1 s. Generally, a mechanical accumulation system cannot return and re-position in such a short time.

In order to solve this problem the prior art has proposed machines including two baskets alternating between a storing position and a delivery position to the output device. In this way, one of the two baskets is always available for storing the pieces coming from the press.

This solution is implemented in the prior art for example with two substantially identical baskets pivoting about an axis. The switch between the storing position and delivery position therefore takes place with a rotation about said axis. A drawback of this solution is a certain complication that increases the cost and length of the machine. Other solutions comprise a different exchange movement of the baskets, for example translation along a predetermined closed trajectory, but they suffer substantially the same drawbacks and/or require the baskets and the items to perform a complex movement.

Some prior art solutions provide piece-retaining members, such as teeth for example, intended to make a contact with the thermoformed items. Such piece-retaining members become necessary when the movement of the items is complex, in order to keep a desired arrangement of the items themselves. However, they introduce a drawback because shortly after thermoforming the items may still be in a partially plastic state and get damaged by a contact with fixed members.

US 2001/0030104 discloses a method and apparatus for stacking thermoplastic containers.

### Summary of the invention

The invention has the purpose of overcoming the aforementioned limitations and drawbacks of the prior art.

Such a purpose is accomplished with a thermoforming machine and a method according to claims 1 and 14.

Preferred aspects of a machine according to the invention are defined by the dependent claims.

In the loading position, the first container and the second container are in communication and form items receiving tracks along the loading axis substantially without solution of continuity.

At each work cycle the gripping member delivers a layer of items to the first container. Subsequent works cycles therefore progressively form a stack of items that extends along the loading axis. Said stack extends between a last layer of items positioned at a delivery level of the gripping member, and a first layer of items that corresponds to the base of the stack, and that advances along the loading axis in a synchronised manner with the work cycle. A single layer typically comprises a plurality of items arranged orthogonally or in offset rows.

The two translators work in series and are configured to provide a support for the first layer of items, thus supporting the entire stack. The stack is supported by the first translator during a first accumulation step, until an intermediate load is reached, and is supported by the second translator during a second accumulation step until a complete load is reached. During said accumulation steps, the first translator and the second translator, respectively, are controlled to advance along an axis parallel to the loading axis, in a synchronised manner with the work cycle. The advance of the first and second translator can be continuous or with intermittent steps, according to equivalent embodiments of the invention.

In a preferred embodiment, said two containers comprise parallel rods to define items receiving tracks; the translators are substantially comb-shaped comprising linear supports extending between said rods and lying on a plane perpendicular to the loading axis.

The loading axis is preferably vertical or substantially vertical. In some embodiments, however, said loading axis can be inclined relative to the vertical direction. In embodiments with an inclined loading axis, said axis is preferably inclined by a small angle, more preferably no more than 30°, for example between 5° and 20°.

Preferably, said first translator is movable on two axes, thus having two degrees of freedom. In greater detail, said first translator is preferably movable on two axes of translation perpendicular to each other. A first axis of translation is parallel to the loading axis and provides the work stroke; a second axis provides a movement of engagement with, and disengagement from, the stack of items.

By moving on the second axis, the first translator can pass from an engaged position to a disengaged position. In the engaged position the first translator can support the stack of items, then the active work stroke is performed in the engaged position. In the disengaged position, on the other hand, the first translator can perform a return stroke on the first axis without interfering with the stacked items and wait during the second loading step, while the stack is supported by the second translator.

Advantageously, the second translator has a start of stroke position substantially corresponding to the end of stroke position of the first translator, so as to take over the role of the first translator at the end of the first loading step (i.e. once the intermediate load has been reached), when the first translator moves to the disengaged position.

More preferably, the work stroke of the second translator comprises two sections: a first section is carried out with movement synchronised with the loading cycle, until the stack of items is completed; a second section serves to transfer the full stack of items inside the second container, emptying the first container.

In accordance with another preferred aspect of the invention, the second translator is associated with the second container, and is movable with the same from the loading position to the delivery position. In the delivery position, said second translator is adapted to operate as an ejector for transferring the items to said conveyor. In other words, it operates as item ejector integrated in the second basket thus avoiding the need for a further mobile ejection member.

In a preferred embodiment, the second item-carrying container is movable from the loading position to the delivery position through a roto-translation including a translation component away from the first container and towards the outlet conveyor, and an inclination component around a tilting axis, for example around a horizontal axis. By means of said inclination, the second container is aligned with the transportation plane of the outlet conveyor, said plane being preferably inclined.

The second container in some embodiments can have a capacity of a multiple of the capacity of the first container, for example double or greater.

The thermoforming press is of a known type; typically it comprises a fixed half-mould and a mobile half-mould. The gripping member extracts the items from the mobile half-mould and transfers them to the first container.

Another aspect of the invention is represented by a method for transferring items from a press to an output device in a thermoforming machine, according to the attached claims.

The invention has the following advantages. First it shall be noted that only the second container must be motorised to travel between the loading setup and the delivery setup. The first container can be fixed and suitably placed to receive the items directly from the press extraction member. For example, the first container is loaded from above by the aforementioned gripping member.

Then the first container is always available for the accumulation and storage of the items extracted from the press, whereas the second container acts as an interface means with the output conveyor alternating between the loading position and delivery position. This solution proves just as effective as known solutions with two mobile baskets switching between different positions, being however simpler and more compact.

Another big advantage of the invention is that the accumulation of the items is carried out in two stages, substantially without a solution of continuity, using the first and the second translator, respectively.

The invention solves the problem of repositioning in a compatible manner with the cycle time of the press, thanks to the alternation of the two translators: while the second translator completes the formation of the stack of items, the first translator can perform the return stroke and reach a waiting position; then when the second container moves to the delivery position, close to the conveyor, the first translator is immediately available to support a new layer of items coming from the press and start the formation of another stack. In this way, the accumulation and transfer of items is highly efficient and is able to follow the work cycle of the press without slowing it down.

A further advantage of a preferred embodiment of the invention the second translator also working as an ejector integrated in the second basket. Therefore, a special ejector is not necessary, simplifying the output section of the machine.

Another advantage of the invention is that the arrangement with coaxially aligned containers is particularly suitable for managing stacks of items of a significant size, for example stacks of trays, containers or cups made from plastic, providing a stable and secure stacking. Said advantages allow to safely increasing the production speed.

The invention preferably applies to a thermoforming machine of plastic items such as containers for the food industry, plates, cups, and similar articles.

The constructive simplicity of the machine, together with the high production capacity, is of particular importance in the field of the aforementioned plastic items, which are often disposable items for which a large production volume combined with a low cost are required. The field of thermoformed plastic items faces an increasing demand especially from the food and packaging industry, with a strong incentive to improve the capacity of thermoforming machines (pieces per unit of time) and at the same time to reduce costs. The invention meets this requirement.

The advantages of the invention will become even clearer with the help of the following detailed description, which is given as for exemplary and nonlimiting purpose.

### Brief description of the figures

Fig. 1 schematically shows a thermoforming machine according to a preferred embodiment of the invention.
Fig. 2 shows a detail of the machine of Fig. 1.
Fig. 3 schematically shows a top view of a basket for receiving items and of a respective translator according to a preferred embodiment.
Fig. 4 shows a stack of items that can be formed in the baskets of the machine of Fig. 1.
Figs. 5 to 10 illustrate the operation of the machine of Fig. 1.
Fig. 11 is analogous to Fig. 1 and shows the machine in the item delivery configuration to an output conveyor.

### Detailed description

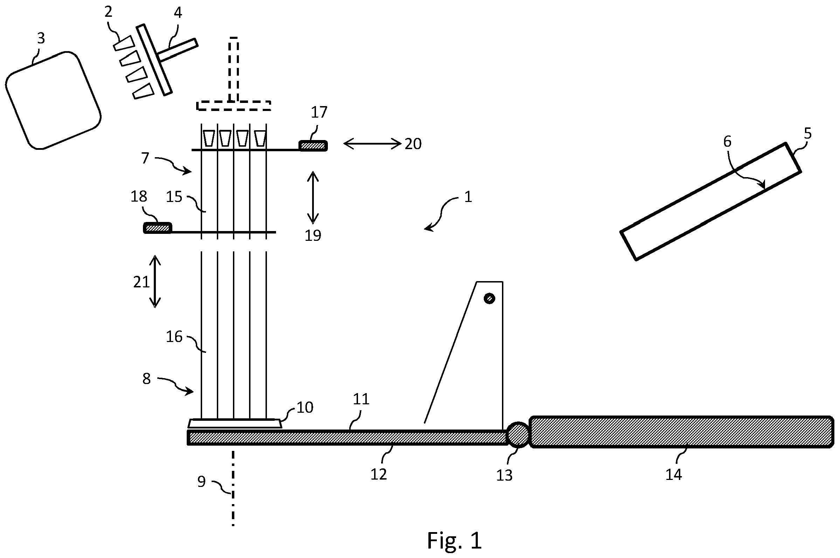

Fig. 1 schematically represents a machine 1 for thermoforming items 2, for example plastic cups.

The machine includes a known thermoforming press, comprising two half-moulds like for example a fixed upper half-mould (not shown) and a mobile lower half-mould 3. The figure shows the lower half-mould 3 and a gripping member 4 (also called gripper) for extracting the items 2 from the press, more specifically from said lower half-mould 3.

The machine also comprises an output conveyor 5 for the items 2. Said conveyor 5 preferably has a conveying plane 6 inclined with respect to the horizontal plane. It can be noted that the conveying plane 6 is perpendicular to the drawing plane of Fig. 1.

The machine comprises a system capable of storing a certain number of items 2 coming from the press, placing the items into a stack, and delivering the items to the conveyor 5.

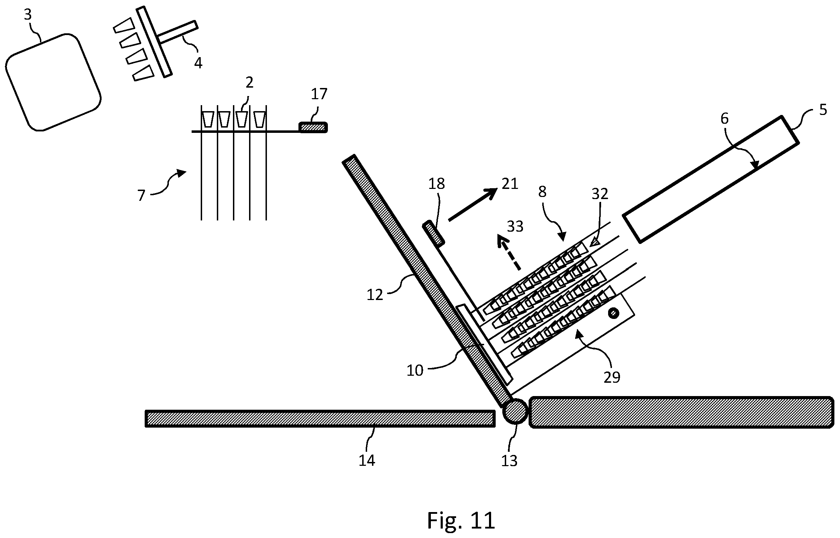

In greater detail, the machine comprises a first basket 7 which can be reached by the gripping member 4, and a second basket 8 that is movable between two positions:
a loading position, where said second basket 8 is aligned with the first basket 7 according to a loading axis 9, for example vertical (Fig. 1);
a position of delivery of the items to the conveyor 5, which is shown in Fig. 11 and will be described hereinafter.

The gripping member 4 is movable between an extraction position for extraction from the half-mould 3 and a release position for release into the first basket 7 (broken line of Fig. 1). The gripping member 4 operates with a cycle time between said extraction position and release position, loading the first basket 7 from top. Said first basket 7 is advantageously fixed beneath the gripping member 4.

The second basket 8 is fixedly connected to a trolley 10 that is movable on a guide 11. Said guide 11 is part of a platform 12 that can tilt with respect to a horizontal pivoting axis 13 by means of a suitable actuator, for example pneumatic (not shown). Reference numeral 14 denotes the fixed frame of the machine 1.

In the loading position of Fig. 1 the second basket 8 is aligned with and adjacent to the overlying first basket 7, so that the two baskets 7, 8 form tracks 15, 16 for receiving the items substantially without a solution of continuity and allow the progressive stacking of items along the loading axis 9.

The machine comprises a first translator 17 and a second translator 18 that assist the operations of: receiving the items coming from the half-mould 3, stacking the items in the baskets 7 and 8, delivering the items to the conveyor 5.

In greater detail, the first translator 17 is movable on two axes: a work axis 19 parallel to the loading axis 9, and an axis 20 perpendicular to the axis 19. The axis 19 provides a work stroke and the axis 20 provides an engagement and disengagement movement with/from the baskets, which allows return of the translator 17 without interfering with the stacked items.

For example, the translator 17 is slidable on a horizontal guide which provides the degree of freedom on the axis 20, and said guide is fixed to a trolley sliding vertically on another guide, to provide the degree of freedom on the vertical axis 19.

The second translator 18 has a work stroke along an axis 21 parallel to the loading axis 9. The work stroke of said second translator 18 extends between an upper end that substantially corresponds to the lower end of stroke of the first translator 17, and a lower end substantially at the base of the second basket 8.

The second translator 18 slides on a guide mounted on the platform 12. Consequently, said second translator 18 is associated with the second basket 8 and follows the basket 8 from the loading position to the delivery position. In the delivery position, the second translator 18 can operate as an ejector of items towards the conveyor 5.

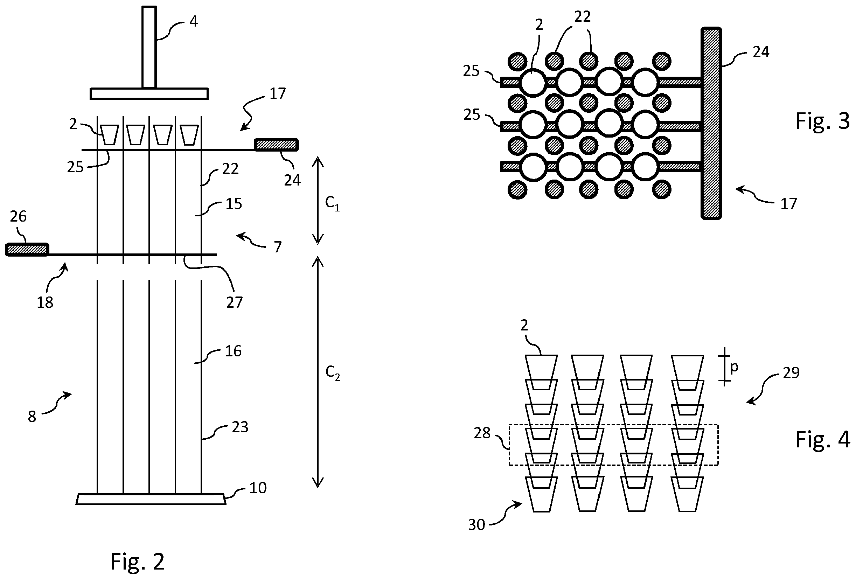

The structure of the baskets 7, 8 and of the translators 17, 18 is depicted in greater detail in Figs. 2 and 3.

The baskets 7, 8 comprise a cage of rods 22, 23 to define the tracks 15, 16 for receiving the items 2. The rods 22, 23 have the same arrangement so as to define continuous tracks 15, 16 from the top of the first basket 7 to the base of the second basket 8. Other embodiments of the baskets are possible, for example the baskets can be formed from a cage of wavy sheet metal.

Fig. 2 shows the work stroke C₁ of the first translator 17 and the work stroke C₂ of the second translator 18.

The items 2 can be arranged according to orthogonal rows, as in Fig. 3, or according to offset rows (also termed staggered).

Fig. 3 also shows a preferred embodiment of the translators. In particular, the figure shows the first translator 17 having a comb or "blade" shape and essentially comprising a beam 24 carrying a number of linear supports 25 which extend between the rows of rods 22 to support the items 2. The second translator 18, in the illustrated example, has a similar structure with a beam 26 and linear supports 27.

The way the items are stacked is disclosed in Fig. 4. Each work cycle of the gripping member 4 delivers a layer (or level) 28 of items, comprising a plurality of items 2, and the layers form a stack 29 having a pitch p that denotes the distance between two consecutive layers. The stack 29 is formed starting from a lower layer 30 that represents the base of the stack and rests on the supports 25 of the translator 17 or on the supports 27 of the translator 18.

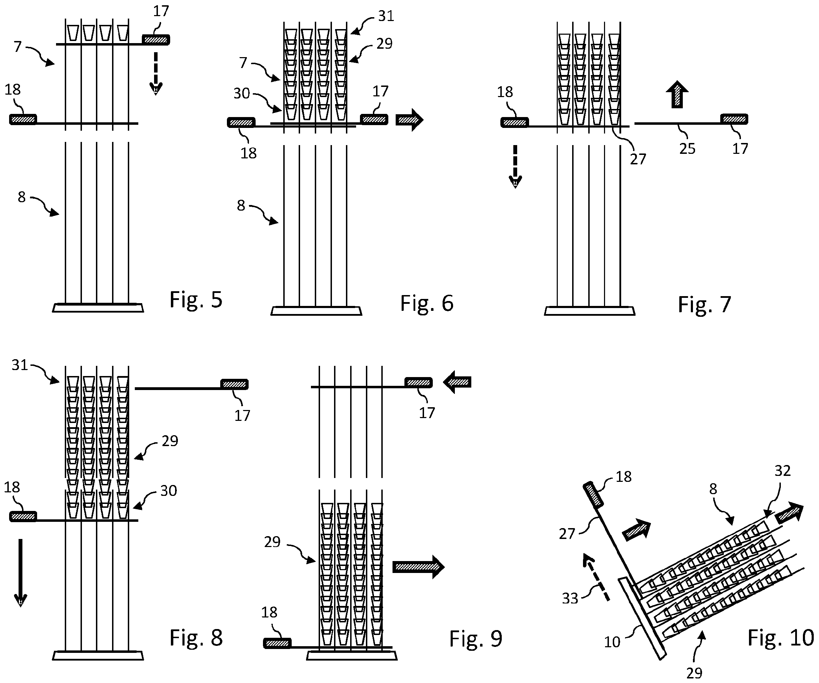

The operation of the machine and the loading cycle are illustrated in Figs. 5 to 10.

Fig. 5 shows the machine 1 at the start of a loading cycle. The first translator 17 is in start of stroke position (upper start of stroke), close to the upper opening of the basket 7.

At each thermoforming cycle the gripping member 4 transfers a group of items 2 from the half-mould 3 to the first basket 7. The translator 17 goes down in a synchronised manner with the work cycle of the gripping member 4, as indicated by the dashed arrow of Fig. 5, and consequently the base 30 of the stack also goes down, as new layers of items arrive from the press.

In a cycle time of the press and of the gripping member 4, the translator advances in the direction of the loading axis 9 by a distance equal to the pitch p of the stack. Said advancing can be obtained with a continuous motion of the translator 17, at a suitably regulated constant speed, or with an intermittent step-by-step motion.

Turning to Fig. 6, the stack 29 is progressively formed between the first layer 30, supported by the translator 17, and the last layer 31 delivered by the gripping member 4. The level of the layer 31 (top of the stack 29) is set by the kinematics of the member 4 and can be fixed or variable within a predetermined range, according to the movement of the member 4. For example, in some embodiments the member 4 has a linear axis and therefore the level of the upper layer 31 can vary, generally within a narrow range permitted by said linear axis of the member 4. The level of the lower layer 30 advances along the loading axis 9 (going down in the example) in a synchronised manner with said work cycle, thanks to the movement of the translator 17.

A single layer 28 typically comprises a plurality of items 2, arranged in orthogonal rows (like for example in Fig. 3) or in an offset arrangement.

Fig. 6 shows the reaching of an intermediate loading step wherein the first translator 17 is at the end of the work stroke C₁, and still below the stack of items. The second translator 18 is in a start of stroke position that substantially coincides with the end of stroke of the first translator 17, for example being slightly below. The second translator 18 is thus ready to take over the role of the first translator.

In this condition the first translator 17 is disengaged from the baskets sliding in the direction 20 and extracting the supports 25 from the tracks 15 of the basket 7. Then the items 2 are no longer supported by the first translator 17 and find a support on the second translator 18 which is found immediately below. Basically, the first translator 17 delivers the partially formed stack 29 to the second translator 18. It should be noted that such passage from the first to the second translator can take place at the bottom of the first basket 7 as shown, or at a different point (for example higher or lower) along the axis 9.

The stack 29 grows as further layers of items arrive from the press, through the gripping member 4, the stack being now supported by the second translator (Fig. 7) that goes down similarly to the first translator and synchronised with the cycle time, until a desired load is reached (Fig. 8). Also the second translator 18, in this step, can operate with continuous or intermittent motion. Meanwhile, the first translator 17 is free to return to the start of stroke position, being extracted and disengaged from the first basket 7. It should be noted that the return of the first translator 17 is not bound by the time of the thermoforming cycle.

Fig. 8 shows a condition when a desired load is reached, that is completion of the stack 29. When completed, the stack 29 is contained in the basket 7 and partly in the basket 8. The first translator 17 is in a waiting position, being at the start of its stroke but disengaged from the basket 7.

From the condition of Fig. 8, the translator 18, which still supports the stack 29, goes to the lower end stop, for example with a continuous movement, taking the upper layer 31 of the stack 29 inside the second basket 8. The stack 29 is then fully contained in the second basket 8 (Fig. 9), freeing the first basket 7. In this condition the storage is complete and the delivery cycle to the outlet conveyor 5 can begin; the first translator 17 returns to the engaged position, so that the first basket 7 is immediately ready to receive the items 2 coming from the press.

The second basket 8 goes to the delivery position near the conveyor 5, sketched in Fig. 10. To this purpose, the trolley 10 moves along the guide 11 and takes the second basket 8 close to the conveyor 5; once this position has been reached, the platform 12 tilts around the tilting axis 13 until the axis of the second basket 8 is substantially aligned with the conveying plane 6 of the conveyor 5.

In the example, the basket 8 has two sequential and separately controlled movements, represented by the linear translation of the trolley 10 and by the inclination with respect to the axis 13, which is for example pneumatically operated. In other embodiments the roto-translation of the basket 8 between the loading and delivery positions can be obtained with equivalent means, for example with a suitably shaped guide track, capable of giving the basket 8 the desired translation and rotation movements, possibly in a combined manner.

The second translator 18 also reaches this position, being substantially integrated in the basket 8.

In this position the second translator 18 operates as an ejector of the items. The delivery configuration is also shown in Fig. 11. The movement axis 21 of the second translator is parallel to the axis of the basket 8, as shown in Fig. 11 and allows the translator to push the rows of items 2 from the basket 8 to the conveyor 5. For example, the translator 18 is arranged as in Fig. 10 with the ends of the supports 27 in contact with a first row 32 of items 2 to be pushed out from the basket 8 and into the adjacent conveyor 5. After expulsion of a first row, the basket 8 advances step by step in the direction of the arrow 33 so as to progressively align the rows of items with the conveying plane 6 of the conveyor 5 until the basket is empty and then returned to the loading position of Fig. 5.

It should be noted that during the delivery to the conveyor 5, one or more layers of items 2 can be received in the first basket 7, starting the formation of a new stack above the first translator 17. The machine is able to manage the delivery of the items to the conveyor, thanks to the translator 18 working as an integrated ejector of the second basket 8, and simultaneously start the formation of another stack in the first basket 7 with the help of the first translator 17. The machine is able to operate in a flexible manner and in accordance with the production cycle of the press, also for high speed production.

## Claims

1. Thermoforming machine comprising a press for thermoforming items (2), a gripping member (4) for extraction of thermoformed items from said press, and a conveyor (5) for transportation of items in output, **characterised in that**:
the machine comprises a first item-carrying container (7) and a second item-carrying container (8),
said gripping member (4) is arranged to carry out a work cycle between a position for extraction of items from the press and a position for delivery of items to the first container (7),
said second container (8) is movable at least between a loading position and a delivery position for delivery to said conveyor,
the second container (8), while in the loading position, is coaxially aligned with respect to the first container (7) according to a loading axis (9),
the first container and the second container, in the loading position, are arranged to receive a stack of items (29) comprising a plurality of layers (28) of items (2) stacked according to said loading axis (9), starting from a first base layer (30),
the machine comprises a first translator (17) and a second translator (18), each of said translators being suitable for supporting said first base layer (30) of the stack of items (29) with an advance motion along the loading axis (9) synchronised with said work cycle of the gripping member, and said translators operating in series respectively with a first work stroke (C₁) and a second work stroke (C₂) along said loading axis (9),
**characterized in that**
the first container and the second container are configured as baskets or cages.

2. Machine according to claim 1, **characterised in that** the first container and the second container, when aligned in the loading position, form items receiving tracks (15, 16) substantially without a solution of continuity.

3. Machine according to claim 1 or 2, **characterised in that**:
the first translator (17) has a work stroke (C₁) from a loading start position to an end of stroke position corresponding to an intermediate loading condition;
the second translator (18) has a work stroke (C₂) from a start of stroke position substantially corresponding to said end position of the first translator, to an end of stroke position in which said stack (29) of items, supported by the second translator, is fully contained in the second container (8).

4. Machine according to any one of the previous claims, said first translator (17) being movable on a first axis (19) parallel to said loading axis (9) to perform said work stroke (C₁), and on a second axis (20) for engagement and disengagement from said stack of items, said second axis (20) being perpendicular to the first axis (19).

5. Machine according to any one of the previous claims, comprising a control system suitable for controlling said translators (17, 18) along the respective work strokes and during the formation of the stack of items, with an advance movement synchronised with a work cycle of said gripping member (4).

6. Machine according to claim 5, wherein the work stroke (C₂) of the second translator (18) comprises: a first stroke section carried out with a movement synchronised with the loading cycle, until the stack of items is completely formed, and a second section to take the entire stack of items (29) inside the second container (8), emptying the first container.

7. Machine according to any one of the previous claims, wherein said loading axis (9) is vertical or substantially vertical.

8. Machine according to any one of the previous claims **characterised in that** the second translator (18) is associated with the second container (8), and is movable with it from the loading position to the delivery position, and said second translator is suitable for operating as ejector of the items from the second container (8) to said conveyor (5) when the second container is in the delivery position.

9. Machine according to any one of the previous claims, wherein said second container (8) is movable from the loading position to the delivery position with a displacement comprising:
a component of horizontal translation away from the first container, and
an component of inclination around a tipping axis (13) to align said second container (8) with a transportation plane (6) of said conveyor (5).

10. Machine according to any one of the previous claims, wherein the first container (7) is fixed.

11. Machine according to any one of the previous claims, wherein the first container (7) can be loaded from above by said gripping member (4).

12. Machine according to any one of the previous claims, wherein the second container has a capacity which is a multiple of the capacity of the first container.

13. A machine according to claim 1, wherein:
said first translator (17) is movable on a first axis (19) parallel to said loading axis (9) to perform said work stroke (C₁), and on a second axis (20) for engagement and disengagement from said stack of items, said second axis (20) being perpendicular to the first axis (19);
said second container (8) is movable from the loading position to the delivery position with a displacement comprising:
a component of horizontal translation away from the first container, and
an component of inclination around a tipping axis (13) to align said second container (8) with a transportation plane (6) of said conveyor (5);
the first container (7) can be loaded from above by said gripping member (4).

14. Method for transferring items (2) in a thermoforming machine, from a press for thermoforming the items to an output conveyor (5), wherein:
items (2) extracted from said press are stored forming a stack (29) of items according to a loading axis (9), inside a first container (7) and a second container (8) aligned along said loading axis (9),
said stack of items (29) is formed above a base layer (30) advancing along the loading axis in a synchronicity with the extraction of the items from the press;
said base layer (30) of the stack of items is supported by a first translator member (17) during a first accumulation step, until an intermediate loading condition is reached, and thereafter by a second translator member (18) during a second accumulation step, until an end of accumulation condition is reached wherein said stack of items (29) is entirely received in the second container,
said second container (8) is taken to a delivery position suitable for interface with the conveyor (5),
in the delivery position, the items are transferred from the second container (8) to the conveyor (5), and
the second container (8) is returned to a loading position where said second container (8) is coaxially aligned with respect to the first container (7) according to said loading axis (9),
**characterized in that**
the first container and the second container are configured as baskets or cages.

15. Method according to claim 14, wherein:
the second accumulation step, in which the stack of items (29) is supported by the second translator (18), comprises;
a first step in which the stack occupies the first container and partially occupies the second container, and the second translator advances with a motion synchronised with an extraction cycle time of the press, until the stack of items is completely formed;
a second step in which said second translator takes the formed stack to an end of loading position, in which the stack of items is completely inside the second container.

16. Method according to claim 14 or 15, wherein:
at the end of the first accumulation step, said first translator (17) is disengaged from the first container, and said second translator (18) is in a position of takeover from the first translator.

17. Method according to claim 16, wherein:
during the second accumulation step, said first translator (17) is in a waiting position disengaged from said stack of items, and once the end of loading condition is reached said first translator returns to a work position and to the start of stroke.

## Patentansprüche

1. Thermoformmaschine umfassend eine Presse zum Thermoformen von Artikeln (2), ein Greifelement (4) zum Entnehmen von thermogeformten Artikeln aus der Presse und einen Förderer (5) zum Transportieren von Artikeln in Ausgabe, **dadurch gekennzeichnet, dass**:
die Maschine einen ersten Artikeltransportbehälter (7) und einen zweiten Artikeltransportbehälter (8) umfasst,
das Greifelement (4) angeordnet ist, um einen Arbeitszyklus zwischen einer Position zum Entnehmen von Artikeln aus der Presse und einer Position zur Lieferung von Artikeln zu dem ersten Behälter (7) auszuführen,
der zweite Behälter (8) zumindest zwischen einer Ladeposition und einer Lieferposition zur Lieferung an den Förderer bewegbar ist,
der zweite Behälter (8) in der Ladeposition koaxial zu dem ersten Behälter (7) nach einer Ladeachse (9) ausgerichtet ist,
der erste Behälter und der zweite Behälter in der Ladeposition angeordnet sind, um einen Stapel von Artikeln (29) aufzunehmen, der eine Vielzahl von Schichten (28) von Artikeln (2) umfasst, die beginnend von einer ersten Basisschicht (30) nach der Ladeachse (9) gestapelt sind,
die Maschine einen ersten Übersetzer (17) und einen zweiten Übersetzer (18) umfasst, wobei jeder der Übersetzer zum Stützen der ersten Basisschicht (30) des Stapels der Artikel (29) mit einer Vorschubbewegung entlang der Ladeachse geeignet ist, die mit dem Arbeitszyklus des Greifelements synchronisiert ist, und
die Übersetzer in Reihe jeweils mit einem ersten Arbeitshub (C₁) und einem zweiten Arbeitshub (C₂) entlang der Ladeachse (9) arbeiten, **dadurch gekennzeichnet, dass** der erste Behälter und der zweite Behälter als Körbe oder Käfige ausgebildet sind.

2. Maschine nach Anspruch 1, **dadurch gekennzeichnet, dass** der erste Behälter und der zweite Behälter, wenn sie in der Ladeposition ausgerichtet sind, Artikelaufnahmespuren (15, 16) im Wesentlichen ohne eine Lösung der Kontinuität bilden.

3. Maschine nach Anspruch 1 oder 2, **dadurch gekennzeichnet, dass**:
der erste Übersetzer (17) einen Arbeitshub (C₁) von einer Ladestartposition zu einer Endhubposition aufweist, die einer Zwischenladebedingung entspricht;
der zweite Übersetzer (18) einen Arbeitshub (C₂) von einer Starthubposition, die im Wesentlichen der Endposition des ersten Übersetzers entspricht, zu einer Endhubposition aufweist, in der der durch den zweiten Übersetzer gestützte Stapel (29) von Artikeln, vollständig im zweiten Behälter (8) enthalten wird.

4. Maschine nach einem der vorherigen Ansprüche, wobei der erste Übersetzer (17) auf einer ersten Achse (19) parallel zur Ladeachse (9) zum Ausführen des Arbeitshubs (C1), und auf einer zweiten Achse (20) zum Einrücken und Ausrücken von dem Stapel von Artikeln bewegbar ist, wobei die zweite Achse (20) senkrecht zu der ersten Achse (19) ist.

5. Maschine nach einem der vorherigen Ansprüche, umfassend Steuersystem, das zum Steuern der Übersetzer (17, 18) entlang der jeweiligen Arbeitshübe und während der Bildung des Stapels von Artikeln geeignet ist, mit einer Vorschubbewegung, die mit einem Arbeitszyklus des Greifelements (4) synchronisiert ist.

6. Maschine nach Anspruch 5, wobei der Arbeitshub (C2) des zweiten Übersetzers (18) umfasst: einen ersten Hubabschnitt, der mit einer Bewegung ausgeführt wird, die mit dem Ladezyklus synchronisiert ist, bis der Stapel von Artikeln vollständig gebildet ist, und einen zweiten Abschnitt, um den gesamten Stapel von Artikeln (29) in den zweiten Behälter (8) zu legen, wobei der erste Behälter geleert wird.

7. Maschine nach einem der vorherigen Ansprüche, wobei die Ladeachse (9) vertikal oder im Wesentlichen vertikal ist.

8. Maschine nach einem der vorherigen Ansprüche, **dadurch gekennzeichnet, dass** der zweite Übersetzer (18) dem zweiten Behälter (8) zugeordnet ist und mit diesem von der Ladeposition zur Lieferposition bewegbar ist und der zweite Übersetzer zum Betrieb als Auswerfer der Artikel aus dem zweiten Behälter (8) zu dem Förderer (5) geeignet ist, wenn sich der zweite Behälter in der Lieferposition befindet.

9. Maschine nach einem der vorherigen Ansprüche, wobei der zweite Behälter (8) von der Ladeposition zur Lieferposition mit einer Verschiebung bewegbar ist, wobei die Verschiebung umfasst:
eine Komponente der horizontalen Verschiebung entfernt von dem ersten Behälter, und
eine Neigungskomponente um eine Kippachse (13), um den zweiten Behälter (8) mit einer Transportebene (6) des Förderers (5) auszurichten.

10. Maschine nach einem der vorherigen Ansprüche, wobei der erste Behälter (7) befestigt ist.

11. Maschine nach einem der vorherigen Ansprüche, wobei der erste Behälter (7) durch das Greifelement (4) von oben beladbar ist.

12. Maschine nach einem der vorherigen Ansprüche, wobei der zweite Behälter eine Kapazität aufweist, die ein Vielfaches der Kapazität des ersten Behälters ist.

13. Maschine nach Anspruch 1, wobei:
der erste Übersetzer (17) auf einer ersten Achse (19) parallel zur Ladeachse (9) zum Ausführen des Arbeitshubs (C1), und auf einer zweiten Achse (20) zum Einrücken und Ausrücken von Artikeln bewegbar ist, wobei die zweite Achse (20) senkrecht zur ersten Achse (19) ist;
der zweite Behälter (8) von der Ladeposition zur Lieferposition mit einer Verschiebung bewegbar ist, wobei die Verschiebung umfasst:
eine Komponente der horizontalen Verschiebung entfernt von dem ersten Behälter, und
eine Neigungskomponente um eine Kippachse (13), um den zweiten Behälter (8) mit einer Transportebene (6) des Förderers (5) auszurichten,
wobei der erste Behälter (7) durch das Greifelement (4) von oben beladbar ist.

14. Verfahren zum Überführen von Artikeln (2) in einer Thermoformmaschine aus einer Presse zum Thermoformen der Artikel zu einem Ausgabeförderer (5), wobei:
Artikel (2), die aus der Presse entnommen wurden, unter Bildung eines Stapels (29) von Artikeln nach einer Ladeachse (9) innerhalb eines ersten Behälters (7) und eines zweiten Behälters (8) gelagert werden, der entlang der Ladeachse (9) ausgerichtet ist,
der Stapel von Artikeln (29) über einer Basisschicht (30) ausgebildet ist, die synchron mit dem Entnehmen der Artikel aus der Presse entlang der Ladeachse vorrückt,
die Basisschicht (30) des Stapels von Artikeln von einem ersten Übersetzer (17) während eines ersten Ansammlungsschritts, bis ein Zwischenladezustand erreicht ist, und danach von einem zweiten Übersetzer (18) während eines zweiten Ansammlungsschritts gestützt wird, bis ein Ende der Ansammlungsbedingung erreicht ist, wobei der Stapel von Artikeln (29) vollständig in den zweiten Behälter aufgenommen wird,
der zweite Behälter (8) zu einer Lieferposition gebracht wird, die für eine Schnittstelle mit dem Förderer (5) geeignet ist,
in der Lieferposition die Artikel vom zweiten Behälter (8) zum Förderer (5) überführt werden, und
der zweite Behälter (8) in die Ladeposition zurückgebracht wird, in der der zweite Behälter (8) in Bezug auf den ersten Behälter (7) nach der Ladeachse (9) koaxial ausgerichtet ist
**dadurch gekennzeichnet, dass** der erste Behälter und der zweite Behälter als Körbe oder Käfige ausgebildet sind.

15. Verfahren nach Anspruch 14, wobei:
der zweite Ansammlungsschritt, in dem der Stapel von Artikeln (29) von dem zweiten Übersetzer (18) gestützt wird, umfasst:
einen ersten Schritt, in dem der Stapel den ersten Behälter und teilweise den zweiten Behälter einnimmt und der zweite Übersetzer mit einer Bewegung vorrückt, die mit einer Entnahmezykluszeit der Presse synchronisiert ist, bis der Stapel von Artikeln vollständig gebildet ist,
einen zweiten Schritt, in dem der zweite Übersetzer den gebildeten Stapel zu einem Ende der Ladeposition bringt, in der sich der Stapel von Artikeln vollständig innerhalb des zweiten Behälters befindet.

16. Verfahren nach Anspruch 14 oder 15, wobei:
am Ende des ersten Ansammlungsschritts der erste Übersetzer (17) von dem ersten Behälter gelöst wird, und der zweite Übersetzer (18) sich in einer Übernahmeposition von dem ersten Übersetzer befindet.

17. Verfahren nach Anspruch 16, wobei:
sich der erste Übersetzer (17) während des zweiten Ansammlungsschritts in einer Warteposition befindet, die von dem Stapel von Artikeln gelöst ist, und der erste Übersetzer in eine Arbeitsposition und zum Beginn des Hubs zurückkehrt, sobald das Ende der Ladebedingung erreicht ist.

## Revendications

1. Machine de thermoformage comprenant une presse pour le thermoformage d'articles (2), un élément de préhension (4) pour l'extraction d'articles thermoformés à partir de ladite presse, et un transporteur (5) pour le transport d'articles en sortie,
**caractérisée en ce que** :
la machine comprend un premier conteneur (7) support d'articles et un second conteneur (8) support d'articles,
ledit élément de préhension (4) est agencé pour réaliser un cycle de travail entre une position pour l'extraction d'articles depuis la presse et une position pour la distribution d'articles vers le premier conteneur (7),
ledit second conteneur (8) est mobile au moins entre une position de chargement et une position de distribution pour la distribution vers ledit transporteur,
le second conteneur (8), pendant qu'il est dans la position de chargement, est coaxialement aligné par rapport au premier conteneur (7) selon un axe de chargement (9),
le premier conteneur et le second conteneur, dans la position de chargement, sont agencés pour recevoir une pile d'articles (29) comprenant une pluralité de couches (28) d'articles (2) empilés selon ledit axe de chargement (9), en débutant à partir d'une première couche de base (30),
la machine comprend un premier translateur (17) et un second translateur (18), chacun desdits translateurs étant appropriés pour supporter ladite première couche de base (30) de la pile d'articles (29) avec un mouvement d'avancement le long de l'axe de chargement (9) synchronisé avec ledit cycle de travail de l'élément de préhension, et lesdits translateurs fonctionnant en série respectivement avec une première course de travail (C₁) et une seconde course de travail (C₂) le long dudit axe de chargement (9),
**caractérisée en ce que**
le premier conteneur et le second conteneur sont configurés sous la forme de paniers ou de cages.

2. Machine selon la revendication 1, **caractérisée en ce que** le premier conteneur et le second conteneur, lorsqu'ils sont alignés dans la position de chargement, forment des pistes de réception d'articles (15, 16) sensiblement sans solution de continuité.

3. Machine selon la revendication 1 ou 2, **caractérisée en ce que** :
le premier translateur (17) a une course de travail (C₁) depuis une position de début de chargement vers une fin de position de course correspondant à une condition de chargement intermédiaire ;
le second translateur (18) a une course de travail (C₂) depuis un début de position de course sensiblement correspondant à ladite position de fin du premier translateur, vers une fin de position de course dans laquelle ladite pile (29) d'articles, supportée par le second translateur, est totalement contenue dans le second conteneur (8) .

4. Machine selon une quelconque des revendications précédentes, ledit premier translateur (17) étant mobile sur un premier axe (19) parallèle audit axe de chargement (9) pour effectuer ladite course de travail (C₁), et sur un second axe (20) pour s'engager et se désengager de ladite pile d'articles, ledit second axe (20) étant perpendiculaire au premier axe (19).

5. Machine selon une quelconque des revendications précédentes, comprenant un système de commande approprié pour commander lesdits translateurs (17, 18) le long des courses de travail respectives et pendant la formation de la pile d'articles, avec un mouvement d'avancement synchronisé avec un cycle de travail dudit élément de préhension (4).

6. Machine selon la revendication 5, dans laquelle la course de travail (C₂) du second translateur (18) comprend : une première section de course réalisée avec un mouvement synchronisé avec le cycle de chargement, jusqu'à ce que la pile d'articles soit complètement formée, et une seconde section pour prendre la pile entière d'articles (29) à l'intérieur du second conteneur (8), en vidant le premier conteneur.

7. Machine selon une quelconque des revendications précédentes, dans laquelle ledit axe de chargement (9) est vertical ou sensiblement vertical.

8. Machine selon une quelconque des revendications précédentes, **caractérisée en ce que** le second translateur (18) est associé au second conteneur (8), et est mobile avec celui-ci depuis la position de chargement vers la position de distribution, et ledit second translateur est approprié pour fonctionner sous la forme d'un éjecteur des articles depuis le second conteneur (8) vers ledit transporteur(5) lorsque le second conteneur est dans la position de distribution.

9. Machine selon une quelconque des revendications précédentes, dans laquelle ledit second conteneur (8) est mobile depuis la position de chargement vers la position de distribution avec un déplacement comprenant :
une composante de translation horizontale à distance du premier conteneur, et
une composante d'inclinaison autour d'un axe de basculement (13) pour aligner ledit second conteneur (8) avec un plan de transport (6) dudit transporteur(5).

10. Machine selon une quelconque des revendications précédentes, dans laquelle le premier conteneur (7) est fixé.

11. Machine selon une quelconque des revendications précédentes, dans laquelle le premier conteneur (7) peut être chargé depuis le dessus par ledit élément de préhension (4).

12. Machine selon une quelconque des revendications précédentes, dans laquelle le second conteneur a une capacité qui est un multiple de la capacité du premier conteneur.

13. Machine selon la revendication 1, dans laquelle :
ledit premier translateur (17) est mobile sur un premier axe (19) parallèle audit axe de chargement (9) pour effectuer ladite course de travail (C₁), et sur un second axe (20) pour s'engager et se désengager de ladite pile d'articles, ledit second axe (20) étant perpendiculaire au premier axe (19) ;
ledit second conteneur (8) est mobile depuis la position de chargement vers la position de distribution avec un déplacement comprenant :
une composante de translation horizontale à distance du premier conteneur, et
une composante d'inclinaison autour d'un axe de basculement (13) pour aligner ledit second conteneur (8) avec un plan de transport (6) dudit transporteur(5) ;
le premier conteneur (7) peut être chargé depuis le dessus par ledit élément de préhension (4).

14. Procédé pour transférer des articles (2) dans une machine de thermoformage, depuis une presse pour le thermoformage des articles vers un transporteur de sortie (5), dans lequel :
les articles (2) extraits à partir de ladite presse sont stockés en formant une pile (29) d'articles selon un axe de chargement (9), à l'intérieur d'un premier conteneur (7) et d'un second conteneur (8) alignés le long dudit axe de chargement (9),
ladite pile d'articles (29) est formée au-dessus d'une couche de base (30) avançant le long de l'axe de chargement de manière synchrone avec l'extraction des articles de la presse ;
ladite couche de base (30) de la pile d'articles est supportée par un premier élément de translateur (17) pendant une première étape d'accumulation, jusqu'à ce qu'une condition de chargement intermédiaire soit atteinte, puis par un second élément de translateur (18) pendant une seconde étape d'accumulation, jusqu'à ce qu'une fin de la condition d'accumulation soit atteinte, dans lequel ladite pile d'articles (29) est entièrement reçue dans le second conteneur,
ledit second conteneur (8) est pris vers une position de distribution appropriée en tant qu'interface avec le transporteur (5),
dans la position de distribution, les articles sont transférés depuis le second conteneur (8) vers le transporteur (5), et
le second conteneur (8) retourne vers une position de chargement où ledit second conteneur (8) est coaxialement aligné par rapport au premier conteneur (7) selon ledit axe de chargement (9),
**caractérisé en ce que**
le premier conteneur et le second conteneur sont configurés sous la forme de paniers ou de cages.

15. Procédé selon la revendication 14, dans lequel :
la seconde étape d'accumulation, dans laquelle la pile d'articles (29) est supportée par le second translateur (18), comprend :
une première étape dans laquelle la pile occupe le premier conteneur et occupe partiellement le second conteneur, et le second translateur avance avec un mouvement synchronisé avec une temps de cycle d'extraction de la presse, jusqu'à ce que la pile d'articles soit complètement formée ;
une seconde étape dans laquelle ledit second translateur prend la pile formée vers une fin de position de chargement, dans laquelle la pile d'articles est complétement à l'intérieur du second conteneur.

16. Procédé selon la revendication 14 ou 15, dans lequel :
à la fin de la première étape d'accumulation, ledit premier translateur (17) est désengagé du premier conteneur, et ledit second translateur (18) est dans une position de reprise à partir du premier translateur.

17. Procédé selon la revendication 16, dans lequel :
pendant la seconde étape d'accumulation, ledit premier translateur (17) est dans une position d'attente désengagée de ladite pile d'articles, et une fois que la fin de la condition de chargement est atteinte, ledit premier translateur retourne vers une position de travail et vers le début de course.
